# FASCICULE DE BREVET EUROPEEN

(11) **EP 3 369 555 B1**
(45) Date de publication et mention de la délivrance du brevet: **17.07.2019**
(21) Numéro de dépôt: 18152848.0
(22) Date de dépôt: 22.01.2018
(51) Int. Cl.: B29C 64/209, B29C 64/214, B28B 1/00

(54) **PROCEDE ET MACHINE DE FABRICATION DE PIECES PAR LA TECHNIQUE DES PROCEDES ADDITIFS PAR VOIE PATEUSE AVEC AMENEE DE PATE PERFECTIONNEE**
VERFAHREN UND MASCHINE ZUR HERSTELLUNG VON BAUTEILEN MITHILFE DER TECHNIK DER ADDITIVEN FERTIGUNG MIT PASTÖSEN STOFFEN UND PERFEKTIONIERTER STOFFZUFUHR
METHOD AND MACHINE FOR MANUFACTURING PARTS BY THE TECHNIQUE OF ADDITIVE METHODS BY PASTE PROCESSING WITH IMPROVED PASTE TRANSPORT

(30) Priorité: 01.03.2017 FR 1751685
(43) Date de publication de la demande: 05.09.2018
(73) Titulaire: 3Dceram, 87280 Limoges (FR)
(72) Inventeur: Gaignon, Richard, 91770 Saint-Vrain (FR); Chaput, Christophe, 87410 Le Palais sur Vienne (FR)
(74) Mandataire: Cabinet Chaillot

(56) Documents cités:
- EP-A1- 1 925 429
- US-A1- 2006 198 918
- US-A1- 2015 231 832

## Description

La présente invention concerne un procédé et une machine de fabrication de pièces par la technique des procédés additifs, également appelée stéréolithographie.

Ces pièces sont notamment des pièces crues en matériau céramique, destinées à être soumises à des opérations de nettoyage, déliantage et frittage pour obtenir des pièces céramiques finies.

La technique des procédés additifs pour l'obtention de telles pièces crues comprend généralement les étapes suivantes :
- construction, par conception assistée par ordinateur, d'un modèle informatique de la pièce à fabriquer, les dimensions de ce modèle étant plus grandes que celles de la pièce à fabriquer afin de prévoir un retrait de la céramique au cours de la cuisson de la pièce ;
- formation sur un plateau de travail rigide d'une première couche d'une composition photodurcissable comprenant par exemple au moins une matière céramique, au moins un monomère et/ou oligomère photodurcissable, au moins un photoinitiateur et habituellement au moins un plastifiant et/ou au moins un dispersant ;
- durcissement de ladite première couche par irradiation selon un motif défini à partir du modèle pour ladite couche, formant un premier étage ;
- formation, sur ledit premier étage, d'une seconde couche de la composition photodurcissable ;
- durcissement de ladite seconde couche par irradiation selon un motif défini pour ladite couche, formant un deuxième étage ;
- répétition des étapes de la formation de couche suivie du durcissement de la couche jusqu'à obtenir la pièce à l'état cru.

L'irradiation des couches s'effectue par balayage laser de la surface libre de la composition photodurcissable étalée ou par un système de projection à diodes (LED) ou par toutes autres sources lumineuses particulièrement de type UV.

La présente invention concerne la technique des procédés additifs dans laquelle la composition photodurcissable se présente sous la forme d'une pâte dont la composition est photodurcissable, telle que celle mentionnée ci-dessus, et dont la viscosité peut varier notamment de 1 Pa.s à l'infini pour un taux de cisaillement nul.

Dans une fabrication par voie pâteuse, le plateau de travail supporte les différentes couches de la pièce en cours de construction ainsi que la quantité de pâte à étaler à chaque fois que l'on forme une couche. On forme chacune des couches par abaissement du plateau de travail et étalement d'un bourrelet de pâte pour obtenir une couche d'une épaisseur de pâte prédéfinie formée sur le plateau de travail pour la première couche ou sur la couche précédente pour les autres couches de l'empilement. A cet effet, une réserve de pâte est stockée dans un réservoir qui est automatiquement vidé de la quantité de pâte prédéfinie à chaque couche à l'aide d'un piston, le piston remontant cette quantité de pâte au travers d'une fente pour former le bourrelet au voisinage d'un bord de la surface de travail. Le bourrelet de pâte est alors étalé par raclage par une lame de raclage qui, venant se placer derrière lui, le fait avancer en balayant la surface de travail jusqu'à son bord opposé afin d'étaler le bourrelet suivant un mouvement de passe perpendiculaire au bord de la lame de raclage.

Une telle amenée de pâte sur le plateau de travail présente plusieurs inconvénients :
- des efforts de raclage importants peuvent être engendrés, lors de la phase de construction par couches, si bien que les pièces se brisent ou bougent pendant leur construction, générant des défauts ;
- le volume du bourrelet de pâte correspond à la longueur de la surface de travail ; autrement dit, plus la surface de travail est grande, plus il faut de pâte ; cela induit des difficultés :
   - sur la largeur : le système d'amenée de pâte est supposé distribuer uniformément la pâte sur toute la largeur ; une telle distribution homogène en largeur est difficile à mettre au point dans la pratique car la répartition dépend de la largeur et de la quantité de pâte ; si la quantité de pâte amenée est trop faible (remontée du piston trop faible), la pâte a tendance à sortir au milieu et peu sur les côtés, ce qui oblige à imposer une remontée minimale de pâte pour rechercher une bonne homogénéité, avec le risque d'avoir de la pâte en trop au milieu de la surface de travail ;
   - sur la longueur : plus la surface de travail est longue, plus la lame de raclage doit pousser de la pâte pour l'étaler ; d'une part, cela augmente le risque de formation de ménisques, lesquels génèrent des défauts de pièces, tels qu'un manque de matière, un arrachement, etc., et, d'autre part, plus le bourrelet poussé est volumineux, plus l'on génère des contraintes sur les couches inférieures déjà durcies ;
- les pièces construites ne peuvent l'être qu'à partir d'un seul matériau céramique car il n'y a qu'une amenée de pâte.

En conclusion, le système actuel d'amenée de pâte n'assure pas toujours l'homogénéité de chaque couche étalée, conduit à des efforts de raclage importants qui peuvent endommager voire détruire les pièces en construction, limite la surface de travail aussi bien en longueur qu'en largeur, limite la hauteur des pièces à construire et ne permet d'imprimer qu'une seule céramique à la fois.

Le document US 2006/198918 A1 divulgue un procédé et une machine de fabrication d'une pièce par la technique des procédés additifs qui mettent en oeuvre une lame de raclage pour étaler une pâte photodurcissable sur un plateau de travail.

Le document EP1925429 A1 divulgue un distributeur fournissant une quantité prédéterminée de résine sur une table de stéréolithographie, quantité de résine qui est ensuite étalée par un dispositif de réenduction.

La Société déposante a recherché un nouveau système d'amenée de pâte permettant de supprimer au moins l'un de ces inconvénients.

A cet effet, il est prévu, selon l'invention, d'amener la pâte non plus à partir d'un bourrelet de pâte apporté le long d'un bord de la surface de travail, mais de la distribuer sur la surface de travail à partir d'au-dessus de la surface de travail, en particulier à partir d'au moins une buse disposée au-dessus de la surface de travail et déplaçable pour assurer une distribution régulière sur celle-ci.

En prévoyant par exemple une buse de distribution d'un cordon de pâte, laquelle buse se déplace à la fois en va-et-vient sur la largeur de la surface de travail (selon l'axe Y) et de façon rectiligne sur la longueur de la surface de travail (selon l'axe X) afin que le cordon de pâte soit toujours placé devant la lame de raclage en fonctionnement, on forme sur la surface de travail un serpentin régulier de pâte qui assure un étalement régulier et continu de celle-ci et qui ne nécessite pas un effort de raclage important car la lame de raclage ne pousse à chaque instant que la quantité utile de pâte.

Ainsi, les contraintes de cisaillement liées à un étalement de pâte sur une grande longueur sont rendues minimales, voire supprimées, et la formation de ménisques est fortement diminuée.

De plus, une telle distribution de la pâte peut être effectuée dans le sens transversal sur une largeur du plateau de travail bien plus grande que celle des plateaux de travail existant jusqu'ici. L'invention permettra donc de réaliser des plateaux de travail beaucoup plus larges qu'actuellement (300 mm maximum) et en théorie avec des largeurs sans limite.

Egalement, comme la quantité de pâte pour une couche n'est pas toute amenée au départ mais au fur et à mesure de l'avancement de la lame de raclage en étant amenée devant celle-ci quelle que soit sa position d'avance, il est possible de bien en régler la quantité utile pour éviter la formation de ménisques et rendre minimales, voire nulles, les contraintes sur les couches inférieures déjà durcies ; il en résulte que l'on peut faire travailler la lame de raclage sur une longueur beaucoup plus importante et plus rapidement du fait de l'absence de contraintes ou de moindres contraintes.

En outre, le fait qu'à chaque formation de couche, on amène seulement la quantité de pâte nécessaire, permet de former les couches avec des matériaux qui peuvent être différents d'une couche à l'autre. Il devient donc possible de former des pièces multi-matériaux, par exemple céramiques.

Il est bien entendu envisagé, dans le cadre de la présente invention, que plusieurs buses soient activées sur une même passe, simultanément ou non par voie de programmation des buses, à la manière d'une imprimante à jet d'encre, pour avoir plusieurs matières sur une même couche. Il est donc possible de déposer différents matériaux à différentes largeurs sur une même couche.

De plus, il devient possible de prévoir des couches de composition photodurcissable sans la matière céramique, en d'autres termes d'une composition comprenant au moins un monomère et/ou oligomère photodurcissable, au moins un photoinitiateur et le cas échéant au moins un adjuvant tel que plastifiant ou dispersant. De telles couches peuvent être des couches supports qui seront détruites lors du déliantage de la pièce ou encore être des couches créatrices de cavités utiles lors de la construction des pièces, lesquelles couches seront détruites lors du déliantage.

Enfin, il est possible d'envisager que la distribution de pâte devant la lame soit programmable, c'est-à-dire enclenchée et arrêtée sur consigne, ce qui permet d'envisager la formation de plusieurs pièces en parallèle sur la largeur et/ou la longueur d'un plateau de travail, le distribution de pâte par la ou les buses étant enclenchée uniquement autour de l'emplacement de chaque pièce à former sur le plateau de travail.

L'invention a pour objet un procédé de fabrication d'une pièce, notamment d'une pièce crue en matériau céramique, par la technique des procédés additifs suivant laquelle des couches d'une pâte photodurcissable sont amenées successivement à durcir selon un motif défini pour chaque couche, la première couche étant formée sur une surface de travail sur un plateau de travail, chaque couche étant, avant son durcissement selon un motif défini, étalée par raclage par une lame de raclage ou des lames de raclage parallèles à partir d'une quantité de pâte amenée sur ledit plateau de travail, lequel est abaissé à chaque formation de couche, caractérisé par le fait qu'à chaque formation de couche, on distribue sur la surface de travail la quantité de pâte nécessaire pour former ladite couche, à partir d'au moins une buse que l'on déplace devant la lame de raclage, ou dans le cas de lames de raclage parallèles, devant la lame de raclage avant.

On peut déplacer la buse ou chaque buse transversalement en va-et-vient parallèlement à la lame de raclage ou aux lames de raclage et longitudinalement selon le mouvement d'avance de la ou des lames de raclage d'un bord de la surface de travail au bord opposé de celle-ci.

On peut régler au moins un paramètre choisi parmi le débit de la buse ou de chaque buse et les vitesses de déplacement transversal et longitudinal de la buse ou de chaque buse en fonction d'au moins un paramètre choisi notamment parmi la viscosité de la pâte et l'épaisseur de la couche.

On peut commander la distribution de pâte par une buse ou chaque buse en fonction de la couche à former.

On peut alimenter la buse ou chaque buse en pâte par un tuyau d'amenée de pâte en provenance d'un réservoir de pâte ou on peut alimenter la buse ou chaque buse en pâte par une cartouche de pâte dont elle forme la partie supérieure et qui contient une réserve de pâte avantageusement suffisante pour la formation d'au moins une couche.

On peut distribuer la pâte à partir d'au moins deux buses alignées selon un axe parallèle à la ou aux lames de raclage ou selon un axe perpendiculaire à la ou aux lames de raclage.

Lors de l'étalement d'au moins l'une des couches de pâte, on peut amener au moins une lame de raclage en position de travail, en plus de son mouvement d'avance de raclage à se déplacer en va-et-vient dans son plan selon un mouvement dit de vibration.

On peut commander le dépôt de pâte en continu, formant ainsi un boudin de pâte sur la surface de travail, et/ou en discontinu, formant ainsi des dépôts par points sur la surface de travail.

L'invention a également pour objet une machine de fabrication de pièces, notamment de pièces crues en matériau céramique, par la technique des procédés additifs suivant laquelle des couches de pâte photodurcissable sont amenées successivement à durcir par irradiation selon un motif défini pour chaque couche, ladite machine comprenant :
- un bâti encadrant un plateau de travail horizontal comportant une surface de travail ;
- un portique muni d'au moins une lame de raclage, le portique étant apte à se déplacer sur le bâti au-dessus du plateau de travail de telle sorte que le bord libre de la ou des lames de raclage est apte à étaler par raclage des couches de pâte sur la surface de travail, lesdites couches étant superposées verticalement ;
- des moyens d'irradiation en regard du plateau de travail pour irradier chaque couche une fois étalée pour la faire durcir dans le motif préalablement défini avant d'étaler la couche suivante, laquelle est à son tour durcie dans le motif défini ; et
- des moyens d'amenée d'une quantité de pâte sur le plateau de travail à chaque formation de couche, ladite quantité étant destinée à être étalée par raclage par la ou les lames de raclage pour former la couche associée, caractérisée par le fait que les moyens d'amenée d'une quantité de pâte sur le plateau de travail sont constitués par au moins une buse de distribution déplaçable devant la lame de raclage ou, dans le cas de lames de raclage parallèles, devant la lame de raclage avant, la ou chaque buse de distribution étant apte à appliquer de la pâte selon un programme prédéfini correspondant à la couche associée, afin que la ou les lames de raclage puissent étaler la pâte appliquée en une couche uniforme lors de son ou de leur passage sur celle-ci.

La ou au moins l'une des buses de la machine peut être alimentée en pâte par un tuyau flexible relié à un réservoir de pâte, en particulier un réservoir d'alimentation à piston ou la ou au moins l'une des buses peut être alimentée en pâte par une cartouche de pâte dont elle forme la partie supérieure, qui contient une réserve de pâte avantageusement suffisante pour la formation d'au moins une couche, et qui est rechargeable à partir d'un réservoir d'alimentation monté ou non sur la machine ou qui est remplaçable lorsqu'elle est vide par une cartouche pleine, ce remplacement pouvant être assuré par un bras robotisé.

La ou au moins l'une des buses peut être montée déplaçable à l'aide d'un bras robotisé ou sur un support qui permet un déplacement devant le raclage.

La ou chaque buse peut être montée sur un portique apte à se déplacer sur le bâti au-dessus du plateau de travail selon la longueur de celui-ci, ledit portique étant le portique muni de la ou des lames de raclage ou étant un autre portique, déplaçable indépendamment de celui-ci, la ou chaque buse étant par ailleurs montée déplaçable sur un rail transversal du portique qui la porte.

Dans un mode de réalisation particulier, le portique est un portique muni de lames de raclage, comportant notamment deux lames de raclage, l'une étant opérationnelle lors d'un déplacement du portique dans un sens et l'autre, lors d'un déplacement du portique dans l'autre sens, la ou chaque buse étant montée déplaçable sur un rail transversal dudit portique, la ou chaque buse étant disposée entre les deux lames.

Dans un mode de réalisation particulier, la machine selon la présente invention peut comporter au moins deux buses disposées selon l'axe d'avance du portique ou selon un axe transversal.

L'amplitude d'une ou de chaque buse dans le portique peut être supérieure à la largeur du plateau de travail, de telle sorte que chaque buse est apte à distribuer de la pâte en chaque point du plateau de travail.

La machine selon la présente invention peut comporter des moyens de réglage d'au moins un paramètre choisi parmi le débit de la buse ou de chaque buse et les vitesses de déplacement transversal et longitudinal de la ou chaque buse, en fonction d'au moins un paramètre choisi notamment parmi la viscosité de la pâte et l'épaisseur de la couche.

La machine selon la présente invention peut comporter des moyens de commande du dépôt de pâte en continu, formant ainsi un boudin de pâte sur la surface de travail, et/ou en discontinu, formant ainsi des dépôts par points sur la surface de travail.

Pour mieux illustrer l'objet de la présente invention, on va décrire ci-après, à titre indicatif et non limitatif, plusieurs modes de réalisation particuliers du dispositif de raclage de la machine selon l'invention avec référence au dessin annexé. Sur chacune des Figures, la flèche indique la direction d'avance du dispositif de raclage.

Sur ce dessin :

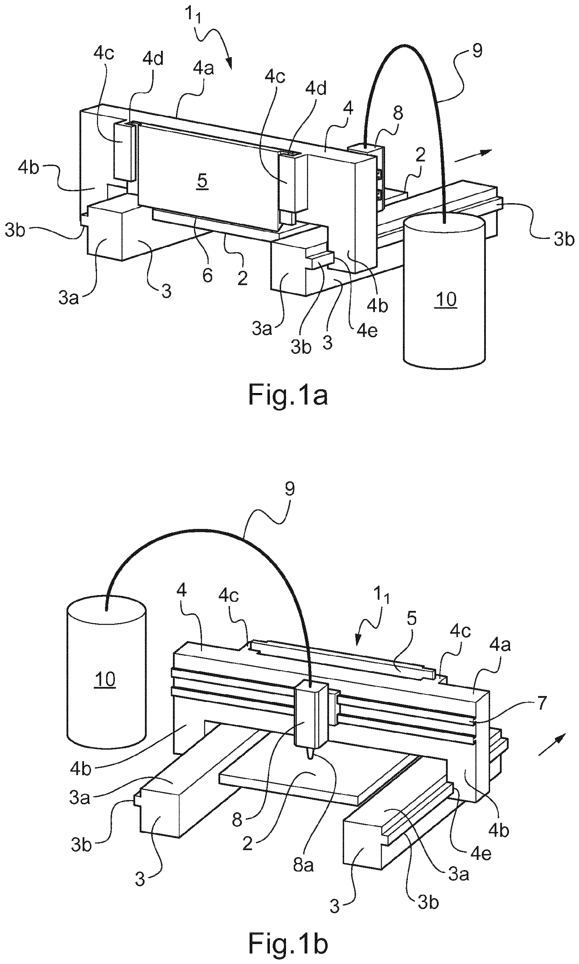

- les Figures 1a et 1b sont des vues schématiques en perspective montrant respectivement l'arrière et l'avant d'un dispositif de raclage conforme à un premier mode de réalisation de l'invention ;

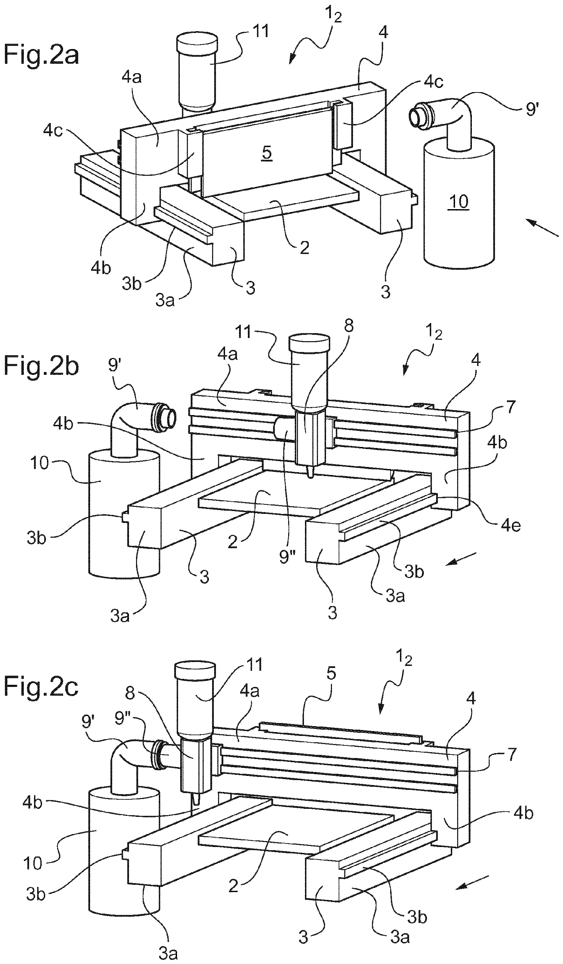

- les Figures 2a et 2b sont des vues schématiques en perspective montrant respectivement l'arrière et l'avant d'un dispositif de raclage conforme à un deuxième mode de réalisation de l'invention ; la Figure 2c est une vue analogue à la Figure 2b montrant le dispositif en position de recharge de la cartouche de pâte ;

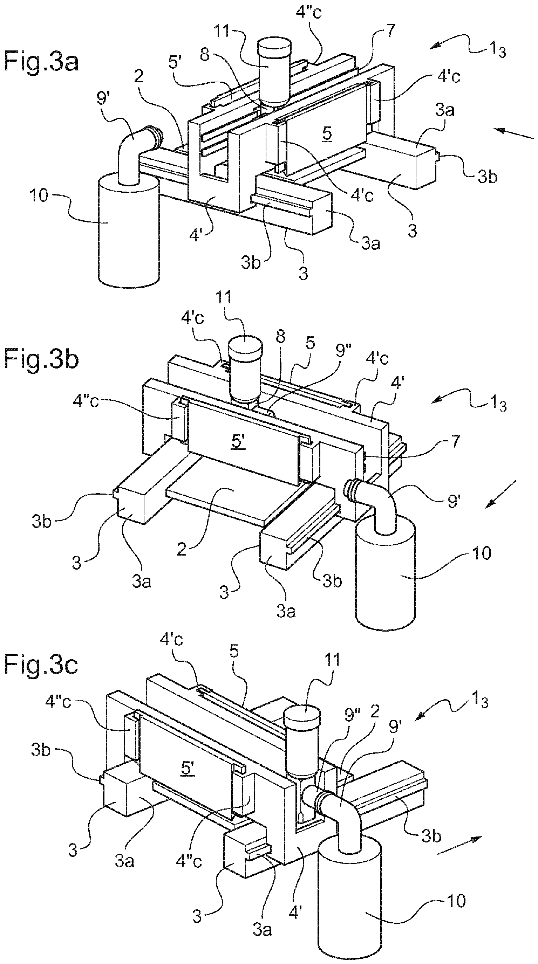

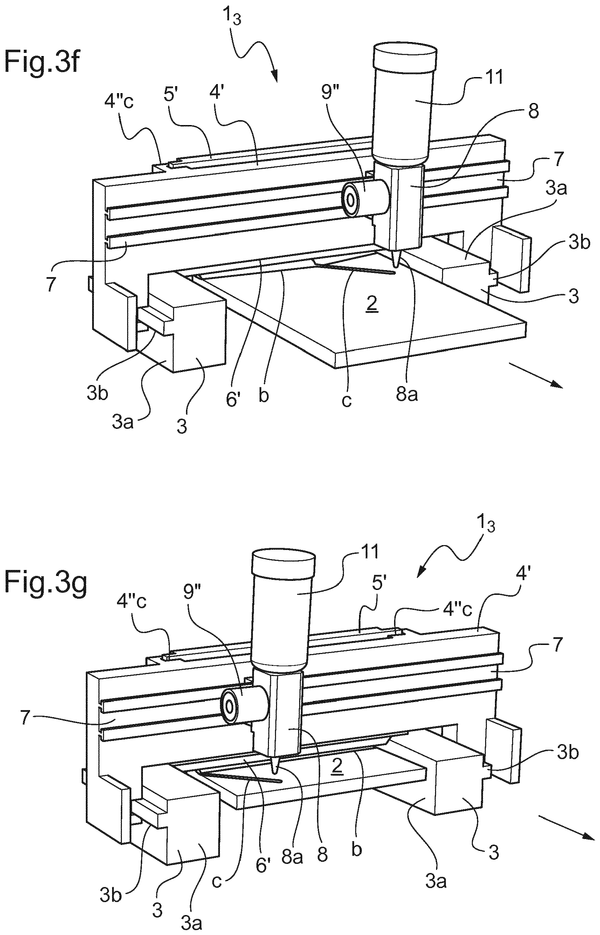

- les Figures 3a à 3e montrent des vues schématiques en perspective d'un dispositif de raclage conforme à un troisième mode de réalisation de l'invention dans différentes positions/orientations suivant lequel deux lames de raclage portées par un même double portique sont prévues, l'une opérationnelle selon une première direction d'avance du portique et l'autre étant opérationnelle selon la direction opposée de retour dudit double portique ; les Figures 3f et 3g montrent ce dispositif de raclage dans lequel le double portique n'est représenté que partiellement, montrant simplement l'une des lames ;

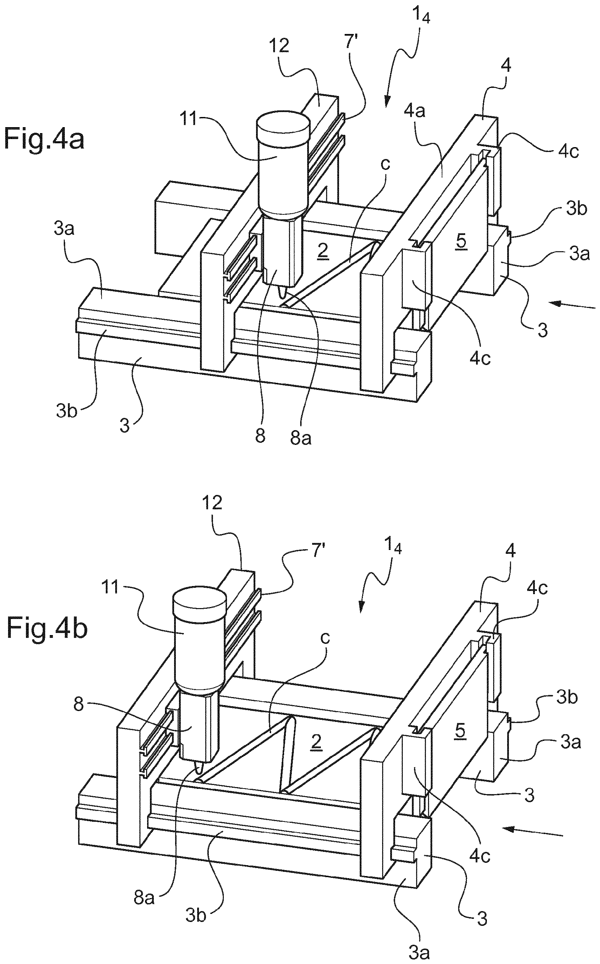

- les Figures 4a et 4b montrent deux vues schématiques en perspective de deux différentes positions d'un dispositif de raclage conforme à un quatrième mode de réalisation de l'invention, suivant lequel la lame de raclage est portée par un portique, et une buse de distribution de pâte est portée par un autre portique indépendant du précédent ;

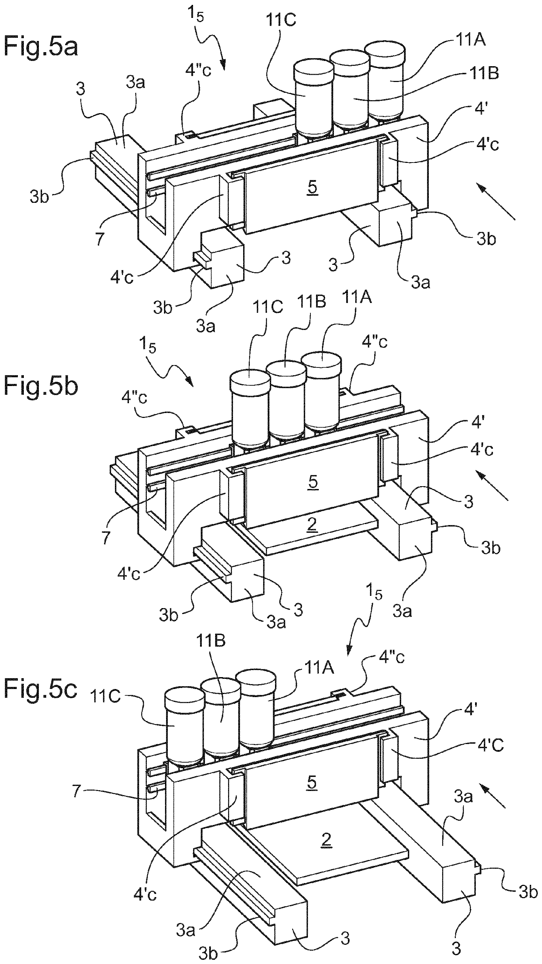

- les Figures 5a à 5c montrent trois vues schématiques en perspective montrant, vues de l'arrière, trois positions différentes d'un dispositif de raclage conforme à un cinquième mode de réalisation de la présente invention, suivant lequel trois buses de distribution de pâte sont prévues, montées dans un alignement parallèle à deux lames de raclage ;

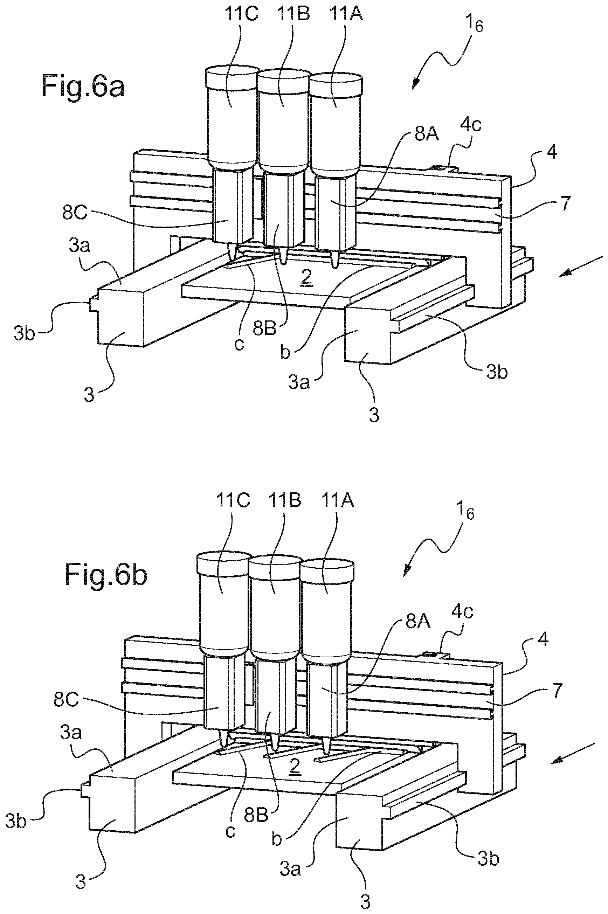

- les Figures 6a et 6b sont deux vues en perspective de deux positions différentes d'un dispositif de raclage conforme à un sixième mode de réalisation de la présente invention, suivant lequel sont également prévues trois buses de distribution de pâte, montées dans un alignement parallèle à une lame de raclage ; et

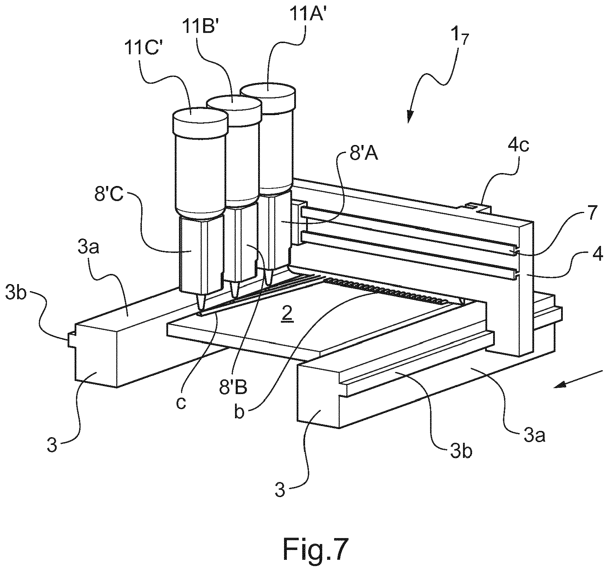

- la Figure 7 est une vue en perspective d'un dispositif de raclage conforme à un septième mode de réalisation de la présente invention, suivant lequel trois buses de distribution de pâte sont montées dans un alignement perpendiculaire à la lame de raclage.

### Premier mode de réalisation : Figures 1a et 1b

Si l'on se réfère aux Figures la et 1b, on peut voir que l'on a représenté un dispositif de raclage 1 d'une couche de pâte sur une surface de travail d'un plateau de travail horizontal 2 d'une machine de fabrication de corps crus en matériau céramique par la technique des procédés additifs. La Figure la montre l'arrière du dispositif de raclage, et la Figure 1b, l'avant de celui-ci.

Le dispositif de raclage 1 comporte, monté coulissant sur le bâti 3 de la machine, un portique 4 avec un moteur qui l'entraîne avec vis à bille ou crémaillère. Un porte-lame 5, dans lequel est disposée une lame de raclage 6, est solidaire du portique 4.

Le bâti 3 comporte deux blocs allongés 3a situés de part et d'autre du plateau de travail 2, chacun de ces blocs 3a portant une nervure 3b qui s'étend horizontalement sur toute sa face latérale externe et dont le rôle est indiqué plus loin.

Le portique 4 consiste en un bloc comportant une partie supérieure 4a en forme de parallélépipède rectangle allongé qui est disposé au-dessus du plateau de travail 2 et du bâti 3, transversalement aux blocs 3a, et qui se prolonge par deux parties latérales inférieures 4b.

La face arrière de la partie supérieure 4a porte deux saillies verticales 4c, chacune de section en U dont une aile est accolée à ladite face arrière. Les rainures 4d de ces sections en U sont disposées en regard l'une de l'autre. Le rôle de ces rainures 4d est indiqué plus loin.

Au voisinage de sa base, chaque partie latérale 4b comporte, tournée vers l'intérieur, une rainure 4e dans laquelle le bloc 3a associé du bâti 3 est apte à coulisser par sa nervure correspondante 3b.

Le porte-lame 5 consiste en une plaque apte à coulisser verticalement par ses deux chants latéraux dans les rainures 4d des saillies verticales associées 4c du portique 4. La lame de raclage 6 est portée par la partie inférieure du porte-lame 5. On peut voir cette lame de raclage 6 sur la Figure 1.

Selon l'invention, et comme on peut le voir sur la Figure 1b, la face avant de la partie supérieure 4a du portique 4 porte un rail horizontal 7 qui s'étend d'un bord vertical à l'autre de la partie 4a et dans lequel est montée coulissante une buse 8 dont l'orifice de sortie 8a est orienté verticalement pour se trouver au-dessus du plateau de travail 2 à chaque instant devant la lame de raclage 6. La buse 8 est alimentée en continu par un tuyau flexible 9 relié à un réservoir d'alimentation 10, par exemple un réservoir d'alimentation à piston.

Le fonctionnement du dispositif de raclage 1₁ des Figures 1a et 1b est le suivant :
Si l'on se réfère à la Figure 1a, on peut voir que la lame de raclage 6 est en position de raclage, le porte-lame 5 ayant été descendu par coulissement dans les rails 4d du portique 4 et arrêté dans une position telle que la lame associée 6 puisse, lors de son raclage, venir former la hauteur de couche désirée.

Dans la position de la Figure 1a, la buse 8 est en position de repos. Pour l'étalement de la couche de pâte, à partir de la position de la Figure 1a :
- on relie la buse 8 au réservoir 10 par le flexible 9 ;
- on déplace par translation dans le rail 7 la buse 8 pour que son orifice 8a vienne au-dessus d'un bord du plateau de travail 2 ;
- on commence l'étalement de la pâte en faisant avancer le portique 4 selon la flèche (Figure 1a) ; lors de cette avance du portique 4, on commande l'alimentation de la buse 8 par le tuyau flexible 9 en même temps que le déplacement de la buse 8 en translation du bord transversal précité à l'autre, puis en retour et ainsi de suite selon un mouvement de va-et-vient. Alors que le portique 4 avance simultanément, un boudin de pâte est déposé en zig-zag sur le plateau 2, et immédiatement raclé par la lame de raclage 6 jusqu'à ce que la couche soit complètement formée.

Le portique 4 étant arrivé à la fin de sa course, autrement dit la couche de pâte ayant été complètement déposée, l'alimentation de la buse 8 est coupée, la lame de raclage 6 est soulevée par remontée du porte-lame 5 et le portique 4 est ramené à sa position de départ (Figure 1b). Sur la Figure 1b, la buse 8 a été représentée dans une position intermédiaire le long du rail 7 ; dans ce cas, elle sera remise en position de départ pour le dépôt d'une nouvelle couche (position de la Figure 1a).

### Deuxième mode de réalisation (Figures 2a à 2c)

Si l'on se réfère aux Figures 2a à 2c, on peut voir que l'on a représenté un dispositif de raclage 1₂ qui diffère du dispositif de raclage 1₁ par le fait que la buse 8 est surmontée d'une réserve de pâte 11. Cette réserve 11 est rechargeable à partir d'un réservoir 10 présentant une tubulure de sortie 9', de forme coudée dans l'exemple représenté, laquelle est apte à venir se raccorder par un court tuyau 9'' faisant saillie hors de la buse 8.

Le fonctionnement du dispositif de raclage 1₂ des Figures 2a à 2c est le même que celui du dispositif 1₁ des Figures la et 1b, excepté que le remplissage de la buse 8 s'effectue lors de la liaison entre la tubulure 9' et le court tuyau 9" (Figure 2c) ; après le remplissage, le court tuyau 9" et la tubulure 9' sont détachés l'un de l'autre.

Sur la Figure 2c, on a représenté le dispositif de raclage 1₂ avant la formation d'une couche de pâte, en position de repos, le porte-lame 5 étant en position remontée. La buse 8 est en position de remplissage de pâte, la quantité de pâte devant être suffisante pour la formation de la couche.

En partant de la position représentée sur la Figure 2c, pour étaler une couche de pâte sur le plateau de travail 2, on abaisse le porte-lame 5 pour placer la lame associée en position de raclage et on détache la tubulure 9' du court tuyau 9" une fois la buse 8 remplie de pâte.

On commande alors les déplacements simultanés d'avance du portique 4 et de va-et-vient de la buse 8 dans le rail 7 (voir Figure 2b où le portique 4 est vu de l'avant, et Figure 2a où le portique est vu de l'arrière).

Une fois la couche de pâte déposée, le porte-lame 5 est relevé et le portique 4 est ramené dans la position de la Figure 2c, et une recharge de la buse 8 est effectuée en vue du dépôt de pâte pour la couche suivante.

### Troisième mode de réalisation : Figures 3a à 3g

Si l'on se réfère aux Figures 3a à 3g, on peut voir que l'on a représenté un dispositif de raclage 1₃ qui diffère du dispositif de raclage 1₂ par le fait que le portique 4 est remplacé par le double portique 4'. Ce dernier est donc constitué de deux portiques de même type que le portique 4, parallèles, réunis par leurs parties latérales inférieures pour se déplacer d'un seul bloc.

Les faces des parties supérieures des deux portiques composant le double portique 4' portent chacune deux saillies de section en U disposées en regard l'une de l'autre (respectivement deux saillies 4'c et deux saillies 4"c), dans lesquelles sont montés coulissants, de la même façon que dans les modes de réalisation précédents, les porte-lames respectivement 5 et 5' avec leurs lames de raclage associées (voir lame 6' sur les Figures 3f et 3g).

Dans l'exemple représenté, seul le portique du double portique 4' portant le porte-lame 5' présente, sur sa face intérieure - celle tournée vers l'autre portique, le rail 7 sur lequel est montée coulissante transversalement la buse 8 surmontée de sa recharge 11. Ainsi la buse 8 est apte à se déplacer entre les deux portiques du double portique 4'.

Ainsi, le double portique 4' se déplacera d'une extrémité à l'autre du plateau de travail 2 dans une course aller où seule une lame de raclage associée à un porte-lame sera active, le porte-lame opposé étant relevé pour que sa lame associée, relevée, ne soit pas opérationnelle, le double portique 4' se déplaçant ensuite dans une course retour pour laquelle les lames seront successivement relevées et abaissées.

Sur les Figures 3f et 3g - ainsi que sur des figures suivantes - « b » désigne le mince bourrelet qui se forme et « c » le cordon de pâte.

Le fonctionnement du dispositif de raclage 1₃ peut être décrit avec référence aux Figures 3a à 3e :

### Figure 3a (vue arrière) et Figure 3b (vue avant) - Formation d'une couche

La lame associée au porte-lame 5 est abaissée et celle associée au porte-lame 5' est relevée. La lame associée au porte-lame 5 est donc fonctionnelle, le portique 4 se déplaçant selon la flèche indiquée avec dépôt de pâte par la buse 8 qui se déplace transversalement en va-et-vient le long du rail 7.

### Figure 3c

Après formation de la couche, la recharge a lieu comme dans le mode de réalisation précédent. La lame associée au porte-lame 5' est abaissée et celle associée au porte-lame 5 est relevée. La lame associée au porte-lame 5' sera donc fonctionnelle pour la formation de la couche suivante, le portique 4' étant prêt à se déplacer dans la direction opposée.

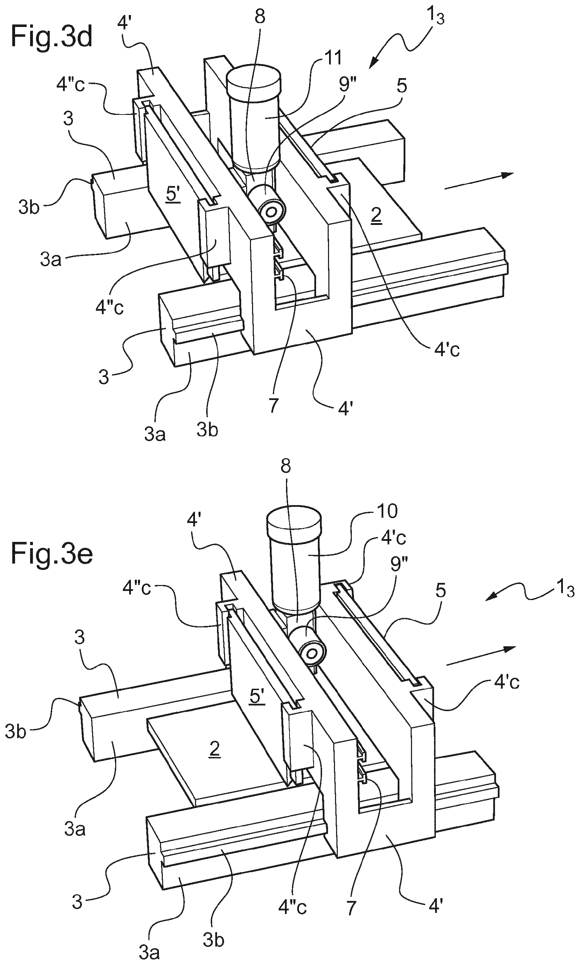

### Figures 3d et 3e : Formation de la couche suivante

Le portique 4' se déplace selon la flèche indiquée (Figure 3d : position initiale et Figure 3e : position finale) avec dépôt de pâte par la buse 8 qui se déplace transversalement en va-et-vient le long du rail 7.

### Quatrième mode de réalisation : Figures 4a et 4b

Si l'on se réfère aux Figures 4a et 4b, on peut voir que l'on a représenté un dispositif de raclage 1₄ qui diffère du dispositif de raclage 1₂ par le fait qu'il comporte, à distance du portique 4, un portique 12, qui est déplaçable indépendamment du portique 4. Le portique 4 porte le porte-lame 5 et sa lame de raclage associée, mais ne présente pas le rail 7. C'est le portique 12 qui présente le rail, désigné par 7', sur lequel la buse 8, avec sa recharge 11, est montée coulissante transversalement.

Le fonctionnement est le même que pour les dispositifs 1₁ et 1₂.

On peut voir, en comparant les Figures 4a et 4b, que le dépôt du cordon de pâte c par la buse 8, peut être commandé indépendamment de la lame de raclage.

### Cinquième mode de réalisation : Figures 5a à 5c

Si l'on se réfère aux Figures 5a à 5c, on peut voir que l'on a représenté un dispositif de raclage 1₅ qui diffère du dispositif de raclage 1₃ par le fait que, dans le rail 7, sont montées coulissantes trois buses - dont on peut voir les recharges 11A, 11B, 11C - disposées côte à côte.

### Sixième mode de réalisation : Figures 6a et 6b

Si l'on se réfère aux Figures 6a et 6b, on peut voir que l'on a représenté un dispositif de raclage 1₆ qui diffère du dispositif de raclage 1₂ par le fait que, dans le rail 7, sont montées côte à côte trois buses 8A, 8B, 8C surmontées de leurs recharges respectivement 11A, 11B, 11C qui sont échangeables manuellement.

### Septième mode de réalisation : Figure 7

Si l'on se réfère à la Figure 7, on peut voir que l'on a représenté un dispositif de raclage 1₇ qui diffère du dispositif de raclage 1₆ par le fait que les buses 11A', 11B' et 11C' sont accolées suivant une direction transversale au rail 7.

Les dispositifs 1₅, 1₆ et 1₇ peuvent être utiles si l'on veut déposer beaucoup de pâte ou si l'on veut changer de type de pâte entre des couches, auquel cas seule une buse est mise en service pour l'application d'une couche.

## Revendications

1. Procédé de fabrication d'une pièce, notamment d'une pièce crue en matériau céramique, par la technique des procédés additifs suivant laquelle des couches d'une pâte photodurcissable sont amenées successivement à durcir selon un motif défini pour chaque couche, la première couche étant formée sur une surface de travail sur un plateau de travail (2), chaque couche étant, avant son durcissement selon un motif défini, étalée par raclage par une lame de raclage (6) ou des lames de raclage parallèles à partir d'une quantité de pâte amenée sur ledit plateau de travail (2), lequel est abaissé à chaque formation de couche, **caractérisé par le fait qu'**à chaque formation de couche, on distribue sur la surface de travail la quantité de pâte nécessaire pour former ladite couche, à partir d'au moins une buse (8) que l'on déplace devant la lame de raclage (6), ou dans le cas de lames de raclage parallèles, devant la lame de raclage avant.

2. Procédé selon la revendication 1, **caractérisé par le fait que** l'on déplace la buse (8) ou chaque buse transversalement en va-et-vient parallèlement à la lame de raclage (6) ou aux lames de raclage et longitudinalement selon le mouvement d'avance de la ou des lames de raclage d'un bord de la surface de travail au bord opposé de celle-ci.

3. Procédé selon la revendication 2, **caractérisé par le fait que** l'on règle au moins un paramètre choisi parmi le débit de la buse (8) ou de chaque buse et les vitesses de déplacement transversal et longitudinal de la buse (8) ou de chaque buse en fonction d'au moins un paramètre choisi notamment parmi la viscosité de la pâte et l'épaisseur de la couche, et que l'on commande la distribution de pâte par une buse (8) ou chaque buse en fonction de la couche à former.

4. Procédé selon l'une des revendications 1 à 3, **caractérisé par le fait que** l'on alimente la buse (8) ou chaque buse en pâte par un tuyau d'amenée de pâte (9) en provenance d'un réservoir de pâte (10) ou que l'on alimente la buse (8) ou chaque buse en pâte par une cartouche de pâte (11) dont elle forme la partie supérieure et qui contient une réserve de pâte avantageusement suffisante pour la formation d'au moins une couche.

5. Procédé selon l'une des revendications 1 à 4, **caractérisé par le fait que** l'on distribue la pâte à partir d'au moins deux buses (11A, 11B, 11C) alignées selon un axe parallèle à la ou aux lames de raclage ou selon un axe perpendiculaire à la ou aux lames de raclage.

6. Procédé selon l'une des revendications 1 à 5, **caractérisé par le fait que** lors de l'étalement d'au moins l'une des couches de pâte, on amène au moins une lame de raclage en position de travail, en plus de son mouvement d'avance de raclage à se déplacer en va-et-vient dans son plan selon un mouvement dit de vibration.

7. Procédé selon l'une des revendications 1 à 6, **caractérisé par le fait que** l'on commande le dépôt de pâte en continu, formant ainsi un boudin de pâte sur la surface de travail, et/ou en discontinu, formant ainsi des dépôts par points sur la surface de travail.

8. Machine de fabrication de pièces, notamment de pièces crues en matériau céramique, par la technique des procédés additifs suivant laquelle des couches de pâte photodurcissable sont amenées successivement à durcir par irradiation selon un motif défini pour chaque couche, ladite machine comprenant :
- un bâti (3) encadrant un plateau de travail horizontal (2) comportant une surface de travail ;
- un portique (4 ; 4') muni d'au moins une lame de raclage (6), le portique (4 ; 4') étant apte à se déplacer sur le bâti (3) au-dessus du plateau de travail (2) de telle sorte que le bord libre de la ou des lames de raclage est apte à étaler par raclage des couches de pâte sur la surface de travail, lesdites couches étant superposées verticalement ;
- des moyens d'irradiation en regard du plateau de travail pour irradier chaque couche une fois étalée pour la faire durcir dans le motif préalablement défini avant d'étaler la couche suivante, laquelle est à son tour durcie dans le motif défini ; et
- des moyens d'amenée d'une quantité de pâte sur le plateau de travail à chaque formation de couche, ladite quantité étant destinée à être étalée par raclage par la ou les lames de raclage pour former la couche associée,
**caractérisée par le fait que** les moyens d'amenée d'une quantité de pâte sur le plateau de travail (2) sont constitués par au moins une buse de distribution (8 ; 8A, 8B, 8C) déplaçable devant la lame de raclage ou, dans le cas de lames de raclage parallèles, devant la lame de raclage avant, la ou chaque buse de distribution (8 ; 8A, 8B, 8C) étant apte à appliquer de la pâte selon un programme prédéfini correspondant à la couche associée, afin que la ou les lames de raclage puissent étaler la pâte appliquée en une couche uniforme lors de son ou de leur passage sur celle-ci.

9. Machine selon la revendication 8, **caractérisée par le fait que** la ou au moins l'une des buses (8) est alimentée en pâte par un tuyau flexible (9) relié à un réservoir de pâte (10), en particulier un réservoir d'alimentation à piston, ou que la ou au moins l'une des buses (8) est alimentée en pâte par une cartouche de pâte (11) dont elle forme la partie supérieure, qui contient une réserve de pâte avantageusement suffisante pour la formation d'au moins une couche, et qui est rechargeable à partir d'un réservoir d'alimentation monté ou non sur la machine ou qui est remplaçable lorsqu'elle est vide par une cartouche pleine, ce remplacement pouvant être assuré par un bras robotisé.

10. Machine selon l'une des revendications 8 et 9, **caractérisée par le fait que** la ou au moins l'une des buses (8) est montée déplaçable à l'aide d'un bras robotisé, ou sur un support qui permet un déplacement devant le raclage.

11. Machine selon l'une des revendications 8 à 10, **caractérisée par le fait que** la ou chaque buse (8) est montée sur un portique (4) apte à se déplacer sur le bâti (3) au-dessus du plateau de travail (2) selon la longueur de celui-ci, ledit portique (4) étant le portique muni de la ou des lames de raclage ou étant un autre portique (12), déplaçable indépendamment de celui-ci, la ou chaque buse (8) étant par ailleurs montée déplaçable sur un rail transversal (7, 7') du portique (4 ; 12) qui la porte, le portique étant notamment un portique (4') muni de lames de raclage, comportant notamment deux lames de raclage, l'une étant opérationnelle lors d'un déplacement du portique (4') dans un sens et l'autre, lors d'un déplacement du portique dans l'autre sens, la ou chaque buse (8) étant montée déplaçable sur un rail transversal (7) dudit portique (4), la ou chaque buse (8) étant disposée entre les deux lames.

12. Machine selon l'une des revendications 8 à 11, **caractérisée par le fait qu'**elle comporte au moins deux buses (8A, 8B, 8C ; 8'A, 8'B, 8'C) disposées selon l'axe d'avance du portique ou selon un axe transversal.

13. Machine selon l'une des revendications 8 à 12, **caractérisée par le fait que** l'amplitude d'une ou de chaque buse (8) dans le portique est supérieure à la largeur du plateau de travail (2), de telle sorte que chaque buse est apte à distribuer de la pâte en chaque point du plateau de travail (2).

14. Machine selon l'une des revendications 8 à 13, **caractérisée par le fait qu'**elle comporte des moyens de de réglage d'au moins un paramètre choisi parmi le débit de la buse (8) ou de chaque buse (8) et les vitesses de déplacement transversal et longitudinal de la buse (8) ou chaque buse (8), en fonction d'au moins un paramètre choisi notamment parmi la viscosité de la pâte et l'épaisseur de la couche.

15. Machine selon l'une des revendications 8 à 14, **caractérisée par le fait qu'**elle comporte des moyens de commande du dépôt de pâte en continu, formant ainsi un boudin de pâte sur la surface de travail, et/ou en discontinu, formant ainsi des dépôts par points sur la surface de travail.

## Patentansprüche

1. Verfahren zur Herstellung eines Stücks, insbesondere eines rohen Stücks aus Keramikmaterial, durch die Technik von Zusatzverfahren, gemäß der Schichten einer fotoaushärtenden Paste nacheinander gemäß einem Muster zum Aushärten gebracht werden, das für jede Schicht definiert ist, wobei die erste Schicht auf einer Arbeitsfläche auf einer Arbeitsplatte (2) geformt ist, wobei jede Schicht vor ihrem Aushärten gemäß einem definierten Muster per Rakeln durch ein Rakelmesser (6) oder parallele Rakelmesser ausgehend von einer Pastenmenge ausgebracht ist, die auf der genannten Arbeitsplatte (2) zugeführt ist, die bei jeder Schichtenbildung abgesenkt wird, **gekennzeichnet durch** die Tatsache, dass bei jeder Schichtenbildung auf der Arbeitsfläche die notwendige Pastenmenge verteilt wird, um die genannte Schicht ausgehend von wenigstens einer Düse (8) zu formen, die vor dem Rakelmesser (6) oder, im Fall von parallelen Rakelmessern, vor dem vorderen Rakelmesser verschoben wird.

2. Verfahren gemäß Anspruch 1, **gekennzeichnet durch** die Tatsache, dass die Düse (8) oder jede Düse quer verlaufend hin und zurück parallel zum Rakelmesser (6) oder zu den Rakelmessern und in Längsrichtung gemäß der Vorschubbewegung des oder der Rakelmesser eines Randes der Arbeitsfläche zu dem dieser entgegengesetzten Rand verschoben werden.

3. Verfahren gemäß Anspruch 2, **gekennzeichnet durch** die Tatsache, dass wenigstens ein Parameter eingestellt wird, der aus dem Durchsatz der Düse (8) oder jeder Düse und den Geschwindigkeiten der transversalen und Längsverschiebung der Düse (8) oder jeder Düse in Abhängigkeit wenigstens eines Parameters ausgewählt ist, der insbesondere aus der Viskosität der Paste und der Dicke der Schicht ausgewählt ist und dass die Verteilung der Paste durch eine Düse (8) oder jede Düse in Abhängigkeit von der zu formenden Schicht gesteuert wird.

4. Verfahren gemäß einem der Ansprüche 1 bis 3, **gekennzeichnet durch** die Tatsache, dass die Düse (8) oder jede Düse durch ein Pasten-Zuführrohr (9) mit Paste versorgt wird, die aus einem Pastentank (10) stammt, oder dass die Düse (8) oder jede Düse durch eine Pastenpatrone (11), deren oberen Teil sie bildet und die einen Pastenvorrat enthält, der für die Bildung wenigstens einer Schicht vorteilhaft ausreichend ist, mit Paste versorgt wird.

5. Verfahren gemäß einem der Ansprüche 1 bis 4, **gekennzeichnet durch** die Tatsache, dass die Paste ausgehend von wenigstens zwei Düsen (11A, 11B, 11C) verteilt wird, die gemäß einer Achse gefluchtet sind, die zu dem oder den Rakelmesser(n) parallel ist / sind, oder gemäß einer zu dem oder den Rakelmesser(n) lotrechten Achse.

6. Verfahren gemäß einem der Ansprüche 1 bis 5, **gekennzeichnet durch** die Tatsache, dass beim Ausbringen wenigstens einer der Pastenschichten wenigstens ein Rakelmesser zusätzlich zu seiner Rakelvorschubbewegung in Arbeitsposition dazu gebracht wird, sich in seiner Ebene gemäß einer so genannten Vibrationsbewegung hin und zurück zu bewegen.

7. Verfahren gemäß einem der Ansprüche 1 bis 6, **gekennzeichnet durch** die Tatsache, dass das kontinuierliche Ausbringen der Paste gesteuert wird, wobei somit ein Pastenwulst auf der Arbeitsfläche geformt ist, und / oder das unterbrochene Ausbringen, wobei somit Ablagerungen in Punktform auf der Arbeitsfläche geformt sind.

8. Maschine zum Herstellen von Stücken, insbesondere von rohen Stücken aus Keramikmaterial, durch die Technik von Zusatzverfahren, gemäß der Schichten aus fotoaushärtender Paste nacheinander zum Aushärten per Bestrahlung gemäß einem für jede Schicht definierten Muster zugeführt werden, wobei die genannte Maschine umfasst:
- ein Gestell (3), das eine horizontale Arbeitsplatte (2) einrahmt, das eine Arbeitsfläche umfasst;
- einen Rahmen (4; 4'), der mit wenigstens einem Rakelmesser (6) versehen ist, wobei der Rahmen (4; 4') geeignet ist, sich auf dem Gestell (3) oberhalb der Arbeitsplatte (2) derart zu verschieben, dass der freie Rand des oder der Rakelmesser(s) geeignet ist, sich per Rakeln der Pastenschichten auf der Arbeitsfläche auszubringen, wobei die genannten Schichten vertikal übereinander gelagert sind;
- Bestrahlungsmittel gegenüber der Arbeitsplatte, um jede Schicht nach dem Ausbringen zu bestrahlen, um sie in dem zuvor definierten Muster zum Aushärten zu bringen, bevor die folgende Schicht ausgebracht wird, die ihrerseits in dem definierten Muster ausgehärtet ist; und
- Zuführmittel einer Pastenmenge auf der Arbeitsplatte bei jeder Schichtenbildung, wobei die genannte Menge dazu bestimmt ist, per Rakeln durch das oder die Rakelmesser ausgebracht zu werden, um die dazugehörige Schicht zu bilden,
**gekennzeichnet durch** die Tatsache, dass die Zuführmittel einer Pastenmenge auf der Arbeitsplatte (2) durch wenigstens eine Verteilerdüse (8; 8A, 8B, 8C), die vor dem Rakelmesser verschiebbar ist, oder, in dem Fall von parallelen Rakelmessern, vor dem vorderen Rakelmesser gebildet sind, wobei die oder jede Verteilerdüse (8; 8A, 8B, 8C) geeignet ist / sind, Paste gemäß einem vordefinierten Programm anzuwenden, das der zugeordneten Schicht entspricht, damit das oder die Rakelmesser die Paste ausbringen kann / können, die in einer gleichmäßigen Schicht bei seinem oder ihrem Durchgang auf derselben angewendet ist.

9. Maschine gemäß Anspruch 8, **gekennzeichnet durch** die Tatsache, dass die oder wenigstens eine der Düse(n) (8) durch eine flexible Röhre (9), die an einen Pastentank (10) angeschlossen ist, insbesondere einen Versorgungstank mit Kolben, mit Paste versorgt wird / werden oder dass die oder wenigstens eine der Düse(n) (8) durch eine Pastenpatrone (11), deren oberen Teil sie bildet, mit Paste versorgt ist / sind, die Pastenvorrat enthält, der für die Bildung wenigstens einer Schicht vorteilhaft ausreichend ist, und die ausgehend von einem Versorgungstank, der auf der Maschine montiert oder nicht montiert ist oder der durch eine volle Patrone austauschbar ist, wenn er leer ist, wiederaufladbar ist, wobei dieser Austausch durch einen robotisierbaren Arm gewährleistet sein kann.

10. Maschine gemäß einem der Ansprüche 8 und 9, **gekennzeichnet durch** die Tatsache, dass die oder die wenigstens eine der Düsen (8) verschiebbar mithilfe eines robotisierbaren Arms oder auf einem Träger montiert ist, der ein Verschieben vor dem Rakeln ermöglicht.

11. Maschine gemäß einem der Ansprüche 8 bis 10, **gekennzeichnet durch** die Tatsache, dass die oder jede Düse (8) auf einem Rahmen (4) montiert ist, der geeignet ist, sich auf dem Gestell (3) oberhalb der Arbeitsplatte (2) gemäß der Länge derselben zu verschieben, wobei das genannte Gestell (4) der Rahmen ist, der mit dem oder den Rakelmesser(n) versehen ist oder ein anderer Rahmen (12) ist, der von diesem unabhängig verschiebbar ist, wobei die oder jede Düse (8) im Übrigen verschiebbar auf einer quer verlaufenden Schiene (7, 7') des Rahmens (4; 12) ist, die ihn trägt, wobei der Rahmen insbesondere ein Rahmen (4') ist, der mit Rakelmessern versehen ist, umfassend insbesondere zwei Rakelmesser, wobei eines bei einer Verschiebung des Rahmens (4') in der einen und der anderen Richtung bei einer Verschiebung des Rahmens in der anderen Richtung betriebsbereit ist, wobei die oder jede Düse (8) verschiebbar auf einer transversalen Schiene (7) des genannten Rahmens (4) montiert ist, wobei die oder jede Düse (8) zwischen den zwei Messern angeordnet ist.

12. Maschine gemäß einem der Ansprüche 8 bis 11, **gekennzeichnet durch** die Tatsache, dass sie wenigstens zwei Düsen (8A, 8B, 8C; 8'A, 8'B, 8'C) umfasst, die gemäß der Vorschubachse des Rahmens oder gemäß einer transversalen Achse angeordnet sind.

13. Maschine gemäß einem der Ansprüche 8 bis 12, **gekennzeichnet durch** die Tatsache, dass die Amplitude einer oder jeder Düse (8) in dem Rahmen derart größer ist als die Breite der Arbeitsplatte (2), dass jede Düse geeignet ist, Paste an jedem Punkt der Arbeitsplatte (2) zu verteilen.

14. Maschine gemäß einem der Ansprüche 8 bis 13, **gekennzeichnet durch** die Tatsache, dass sie Einstellmittel wenigstens eines Parameters umfasst, der aus dem Durchsatz der Düse (8) oder jeder Düse (8) und den Geschwindigkeiten der transversalen und Längsverschiebung der Düse (8) oder jeder Düse (8) in Abhängigkeit wenigstens eines Parameters ausgewählt ist, der insbesondere aus der Viskosität der Paste und der Dicke der Schicht ausgewählt ist.

15. Maschine gemäß einem der Ansprüche 8 bis 14, **gekennzeichnet durch** die Tatsache, dass sie Steuermittel des kontinuierlichen Ausbringens der Paste, wobei somit ein Pastenwulst auf der Arbeitsfläche geformt ist, und / oder des unterbrochenen Ausbringens umfasst, wobei somit Ablagerungen in Punktform auf der Arbeitsfläche geformt sind.

## Claims

1. A method for manufacturing a piece, especially a green piece made of ceramic material, by the technique of additive manufacturing according to which layers of a photocurable paste are successively allowed to cure according to a pattern defined for each layer, the first layer being formed on a working surface on a working tray (2), each layer, before curing according to a defined pattern, being spread by scraping by one scraping blade (6) or parallel scraping blades from an amount of paste supplied onto said working tray (2), which is lowered upon each formation of a layer, **characterised in that**, upon each formation of a layer, the amount of paste necessary to form said layer is dispensed onto the working surface, from at least one nozzle (8) which is moved in front of the scraping blade (6), or in the case of parallel scraping blades, in front of the front scraping blade.

2. The method according to claim 1, **characterised in that** the nozzle (8) or each nozzle is moved transversally back and forth parallel to the scraping blade (6) or to the scraping blades and longitudinally according to the advance movement of the one or more scraping blades from an edge of the working surface to the opposite edge thereof.

3. The method according to claim 2, **characterised in that** at least one parameter selected among the flow rate of the nozzle (8) or of each nozzle and the transversal and longitudinal advance speeds of the nozzle (8) or of each nozzle is adjusted depending on at least one parameter selected especially among the viscosity of the paste and the thickness of the layer, and **in that** the dispensing of paste by one nozzle (8) or each nozzle is controlled depending on the layer to be formed.

4. The method according to one of claims 1 to 3, **characterised in that** the nozzle (8) or each nozzle is supplied with paste by means of a pipe for supplying paste (9) from a paste tank (10) or **in that** the nozzle (8) or each nozzle is supplied with paste by means of a paste cartridge (11) which forms the upper part of the nozzle or of each nozzle and which contains a stock of paste advantageously sufficient to form at least one layer.

5. The method according to one of claims 1 to 4, **characterised in that** the paste is dispensed from at least two nozzles (11A, 11B, 11C) aligned according to an axis parallel to the one or more scraping blades or according to an axis perpendicular to the one or more scraping blades.

6. The method according to one of claims 1 to 5, **characterised in that**, when spreading at least one of the paste layers, at least one scraping blade in working position, in addition to its scraping advance movement, is allowed to go back and forth in its plane according to a so-called vibration motion.

7. The method according to one of claims 1 to 6, **characterised in that** the paste deposit is controlled in a continuous way, thus forming a paste strand on the working surface, and/or in a discontinuous way, thus forming deposits by points on the working surface.

8. A machine for manufacturing pieces, especially green pieces made of ceramic material, by the technique of additive manufacturing according to which layers of photocurable paste are successively allowed to cure by irradiation according to a pattern defined for each layer, said machine comprising:
- a frame (3) surrounding a horizontal working tray (2) comprising a working surface;
- a portal frame (4; 4') equipped with at least one scraping blade (6), the portal frame (4; 4') being adapted to move on the frame (3) over the working tray (2) so that the free edge of the one or more scraping blades is adapted to spread, by scraping, paste layers over the working surface, said layers being vertically superimposed;
- irradiation means facing the working tray to irradiate each layer once spread to cure it in the previously defined pattern before spreading the following layer, which is in turn cured in the defined pattern; and
- supplying means of an amount of paste on the working tray upon each formation of a layer, said amount being intended to be spread by scraping by the one or more scraping blades so as to form the associated layer,
**characterised in that** the supplying means of an amount of paste on the working tray (2) are constituted by at least one dispensing nozzle (8; 8A, 8B, 8C) moveable in front of the scraping blade or, in the case of parallel scraping blades, in front of the front scraping blade, the or each dispensing nozzle (8; 8A, 8B, 8C) being adapted to apply paste according to a predefined program corresponding to the associated layer, so that the one or more scraping blades can spread the paste applied in a uniform layer when passing over it.

9. The machine according to claim 8, **characterised in that** the or at least one of the nozzles (8) is supplied with paste by a flexible pipe (9) connected to a paste tank (10), particularly a piston-type supply tank, or **in that** the or at least one of the nozzles (8) is supplied with paste by a paste cartridge (11) which forms the upper part of the nozzle or of each nozzle, which contains a stock of paste advantageously sufficient to form at least one layer, and which can be refilled from a supply tank mounted or not to the machine or which can be replaced when it is empty with a full cartridge, it being possible that this replacement be performed by a robotic arm.

10. The machine according to one of claims 8 and 9, **characterised in that** the or at least one of the nozzles (8) is moveably mounted by means of a robotic arm, or to a holder which allows a movement in front of the scraping.

11. The machine according to one of claims 8 to 10, **characterised in that** the or each nozzle (8) is mounted to a portal frame (4) adapted to move on the frame (3) over the working tray (2) according to the length thereof, said portal frame (4) being the portal frame equipped with the one or more scraping blades or being another portal frame (12), moveable independently thereof, the or each nozzle (8) being further moveably mounted to a transversal rail (7, 7') of the portal frame (4; 12) which carries it, the portal frame being in particular a portal frame (4') equipped with scraping blades, especially comprising two scraping blades, one being operational when the portal frame (4') moves in one direction, and the other, when the portal frame moves in the other direction, the or each nozzle (8) being moveably mounted to a transversal rail (7) of said portal frame (4), the or each nozzle (8) being arranged between both blades.

12. The machine according to one of claims 8 to 11, **characterised in that** it comprises at least two nozzles (8A, 8B, 8C; 8'A, 8'B, 8'C) arranged according to the advance axis of the portal frame or according to a transversal axis.

13. The machine according to one of claims 8 to 12, **characterised in that** the amplitude of one or of each nozzle (8) in the portal frame is greater than the width of the working tray (2), so that each nozzle is adapted to dispense paste at each point of the working tray (2).

14. The machine according to one of claims 8 to 13, **characterised in that** it comprises adjusting means of at least one parameter selected among the flow rate of the nozzle (8) or of each nozzle (8) and the transversal and longitudinal advance speeds of the nozzle (8) or of each nozzle (8), depending on at least one parameter selected especially among the viscosity of the paste and the thickness of the layer.

15. The machine according to one of claims 8 to 14, **characterised in that** it comprises controlling means of the paste deposit in a continuous way, thus forming a paste strand on the working surface, and/or in a discontinuous way, thus forming deposits by points on the working surface.
